# EUROPÄISCHE PATENTSCHRIFT

(11) **EP 3 189 754 B1**
(45) Veröffentlichungstag und Bekanntmachung des Hinweises auf die Patenterteilung: **06.06.2018**
(21) Anmeldenummer: 16150519.3
(22) Anmeldetag: 08.01.2016
(51) Int. Cl.: A47H 1/19, E06B 9/327, F16G 11/10

(54) **HALTERUNG ZUR BEFESTIGUNG EINER SONNEN- UND/ODER BLICKSCHUTZVORRICHTUNG AN EINEM FENSTER- ODER TÜRRAHMEN**
FIXING DEVICE FOR FIXING A SUN OR VIEW PROTECTION DEVICE ON A WINDOW OR DOOR FRAME
SUPPORT DE FIXATION D'UN DISPOSITIF PARE-SOLEIL ET/OU PARE-VUE SUR UN CADRE DE PORTE OU DE FENÊTRE

(43) Veröffentlichungstag der Anmeldung: 12.07.2017
(73) Patentinhaber: Inventex Establishment, 9486 Schaanwald (LI)
(72) Erfinder: Hagen, Rudolf, 9490 Vaduz (LI)
(74) Vertreter: Schlögl, Markus

(56) Entgegenhaltungen:
- EP-A1- 2 594 165
- EP-A2- 2 329 747
- DE-U1-202004 005 820
- US-A1- 2003 160 137

## Beschreibung

Die Erfindung betrifft eine Halterung gemäß dem Oberbegriff des Anspruchs 1. Hierbei handelt es sich um eine Halterung zur Befestigung einer Sonnen- und/oder Blickschutzvorrichtung, beispielsweise eines Plissees oder einer Jalousie oder eines Vorhangs, an einem Fenster- oder Türrahmen.

Eine derartige Halterung umfasst eine Klemmvorrichtung zum Festklemmen der Halterung an dem Fenster- oder Türrahmen, ein Seil zum Führen und/oder Spannen und/oder Halten der Sonnen- und/oder Blickschutzvorrichtung und eine mit der Klemmvorrichtung verbundene oder verbindbare Seilspannvorrichtung zum Spannen des Seils. Die Seilspannvorrichtung umfasst ein Gehäuse und einen Stift und ein elastisches Element. Das Gehäuse weist einen entlang einer vorgesehenen Seilspannrichtung durchgängigen Hohlraum zur Aufnahme des Stifts auf, wobei der Hohlraum entlang der vorgesehenen Seilspannrichtung zumindest abschnittsweise von einer konusförmigen Innenwand begrenzt ist, und wobei das elastische Element derart in oder am Gehäuse angeordnet ist, dass es gegen eine Stirnfläche des in den Hohlraum eingesetzten Stifts drückt.

Eine solche Seilspannvorrichtung ist beispielsweise aus der Druckschrift US 2003/160137 A1 bekannt. Ferner wird zum Stand der Technik verwiesen auf EP 2 329 747 A2, EP 2 594 165 A1 und DE 20 2004 005 820 U1.

Üblicherweise werden zwei derartige Halterungen mit Seilspannvorrichtung an gegenüberliegenden Enden des Fenster- oder Türrahmens angebracht und ein Seil zwischen diesen beiden Halterungen gespannt. Mit Abstand zu diesem ersten gespannten Seil wird ein zweites Seil auf die gleiche Weise parallel zum ersten Seil mit zwei weiteren derartigen Halterungen mit Seilspannvorrichtung gespannt. Von diesen beiden Seilen wird dann die Sonnen- und/oder Blickschutzvorrichtung gehalten und/oder geführt und/oder gespannt.

Derartige Halterungen mit Seilspannvorrichtung sind bekannt. Bei diesen Spannvorrichtungen besteht jedoch häufig das Problem, dass sie relativ umständlich zu bedienen sind. Mitunter können solche Spannvorrichtungen auch lediglich unter Einsatz von zusätzlichen Werkzeugen gehandhabt werden.

Es ist daher Aufgabe der Erfindung, eine neue Halterung mit einer Seilspannvorrichtung anzugeben, insbesondere eine Halterung, bei der die Seilspannvorrichtung einfach handhabbar ist.

Diese Aufgabe wird gelöst durch die Merkmale des Anspruchs 1. Vorteilhafte Ausgestaltungen und Weiterbildungen sind in den abhängigen Ansprüchen angegeben.

Die Erfindung ist dadurch gekennzeichnet, dass der Stift entlang der vorgesehenen Seilspannrichtung eine durchgehende Zentralbohrung zur Durchführung des Seils und einen oder mehrere radial zur vorgesehenen Seilspannrichtung bewegliche Arme zur Fixierung des durch die Zentralbohrung hindurchgeführten Seils aufweist, wobei die Arme radial gegenüber dem restlichen Stift hervorstehen. Unter "durchgehender Zentralbohrung" wird jede Art von durchgehender Ausnehmung oder Durchführung im Stift verstanden, die zur Durchführung des Seils entlang einer vorgesehenen Seilspannrichtung geeignet ist. Insbesondere muss diese "durchgehende Zentralbohrung" nicht durch einen Bohr- oder Fräsvorgang hergestellt sein, vielmehr kommt es auf die Entstehungsart dieser als "Zentralbohrung" bezeichneten Ausnehmung im Stift nicht an.

Die Erfindung ist ferner dadurch gekennzeichnet, dass das elastische Element derart in oder am Gehäuse angeordnet ist, dass es den oder die radial hervorstehenden Arme des Stifts gegen die konusförmige Innenwand des Gehäuses drückt und der oder die Arme dadurch radial nach innen (zur Zentralbohrung hin) gedrückt werden zur Ausübung einer Klemmkraft auf das durch die Zentralbohrung geführte Seil. Diese Klemmkraft fixiert das Seil in der Seilspannvorrichtung. Ein gespanntes Seil wird dadurch im gespannten Zustand gehalten.

Die Vorteile der Erfindung liegen insbesondere darin, dass sich das Seil zum Spannen entlang der vorgesehenen Seilspannrichtung durch die Seilspannvorrichtung hindurch bewegen lässt, da hierbei der Stift aufgrund der Klemmkraft ein Stück gegen den Druck des elastischen Element mitbewegt wird und auf diese Weise der von der konusförmigen Innenwand ausgehende radiale Druck auf den oder die Arme nachlässt. Dadurch wird die Klemmkraft reduziert und das Seil ist relativ zum Stift durch dessen Zentralbohrung hindurch in der vorgesehenen Seilspannrichtung bewegbar. Ist das Seil gespannt und wird nicht weiter in der vorgesehenen Seilspannrichtung gezogen, so drückt das elastische Element den oder die Arme des Stifts wieder gegen die konusförmige Innenwand, so dass von dieser ein radialer Druck nach innen auf den oder die Arme und damit eine Klemmkraft auf das Seil ausgeübt wird, durch die das Seil fixiert und somit die erreichte Seilspannung gehalten wird. Auf diese Weise ermöglicht die erfindungsgemäße Halterung eine einfache Handhabung der Seilspannvorrichtung.

Vorzugsweise sind der oder die Arme radial zur vorgesehenen Seilspannrichtung elastisch beweglich. Insbesondere sind sie ausgehend von einer Ausgangsstellung, die der oder die Arme ohne äußeren Druck einnehmen, durch Druck radial nach innen zur Zentralbohrung hin bewegbar und federn bei Entfernung des Drucks wieder elastisch in die Ausgangsstellung zurück.

Eine Weiterbildung der Erfindung sieht vor, dass an einer der Zentralbohrung zugewandten Innenseite des oder der Arme des Stifts eine oder mehrere Kugeln gelagert sind, wobei über die Kugel oder die Kugeln zumindest ein Teil der Klemmkraft auf das Seil übertragen wird. Vorzugsweise ist die Kugel oder sind die Kugeln drehbar gelagert. Auch kann die Kugel oder können die Kugeln in einer mit der jeweiligen Kugel korrespondierenden Ausnehmung an der Innenseite des oder der Arme gelagert sein. Unter "korrespondierend" wir insbesondere verstanden, dass die jeweilige Kugel und ihre zugeordnete Ausnehmung hinsichtlich ihrer Abmessungen und Form aufeinander abgestimmt sind. Vorzugsweise wird die Kugel durch die Form der Ausnehmung in dieser gehalten. Besonders bevorzugt ermöglicht die Ausnehmung die Drehung der Kugel.

Das Vorsehen der Kugel bzw. der Kugeln hat den Vorteil, dass sich zum einen durch die Kugeln die Klemmkraft gut auf das Seil übertragen lässt und zum anderen beim Lösen der Klemmkraft die Kugeln eine gute Beweglichkeit des Seils durch die Zentralbohrung ermöglichen.

Beispielsweise können insgesamt drei oder sechs Kugeln vorgesehen sein, aber auch jede andere Anzahl ist möglich. Die Kugeln können so angeordnet sein, dass sie an der gleichen Längsposition am Umfang des Seils anliegen. Es kann aber auch ein versetztes Anliegen an verschiedenen Längspositionen vorgesehen sein, beispielsweise können zwei Gruppen von Kugeln so angeordnet sein, dass die Kugeln einer Gruppe an der gleichen Längsposition anliegen, die Längspositionen der beiden Gruppen sich jedoch voneinander unterscheiden, das heißt die beiden Gruppen sind entlang des Seils zueinander versetzt.

Gemäß einer Ausführungsform der Erfindung weist der Stift mehrere Arme auf, die um den Umfang der Zentralbohrung verteilt sind. Beispielsweise können die Arme durch Längsschnitte im Stift, parallel zur vorgesehenen Seilspannrichtung, voneinander getrennt sein. Ferner können die Arme so ausgebildet und angeordnet sein, dass sie die Stirnfläche des Stifts bilden und an dieser Stirnfläche nicht miteinander verbunden sind. Miteinander verbunden sind die Arme dann beispielsweise nur an ihrem gegenüberliegenden Ende. Vorzugsweise weisen die Arme eine konusförmige Außenwand auf, die mit der konusförmigen Innenwand des Gehäuses korrespondiert. Unter "korrespondiert" wird hier insbesondere verstanden, dass die Konusform von Innen- und Außenwand hinsichtlich ihrer Abmessungen und ihres Konuswinkels derart aufeinander abgestimmt sind, dass beim Drücken der Außenwand gegen die Innenwand die Arme nach innen zur Zentralbohrung hin gedrückt werden. Vorzugsweise weisen Innen- und Außenwand einen im Wesentlichen gleich großen Konuswinkel auf.

Beispielsweise können drei oder sechs Arme vorgesehen sein, aber auch jede andere Anzahl ist möglich. Auch kann vorgesehen sein, dass jeder Arm genau eine oder genau zwei Kugeln lagert.

Bei dem elastischen Element kann es sich um ein Federelement, insbesondere eine Spiralfeder handeln.

Eine Weiterbildung der Erfindung sieht vor, dass das elastische Element zusammen mit dem Stift derart im Hohlraum des Gehäuses angeordnet ist, dass eine erste Seite des elastischen Elements gegen die Stirnfläche des Stifts drückt und eine der ersten Seite abgewandte zweite Seite des elastischen Elements gegen eine Kopffläche der Seilspannvorrichtung drückt.

Gemäß einer Weiterbildung der Erfindung umfasst die Seilspannvorrichtung ein Verbindungsteil zum Verbinden der Seilspannvorrichtung mit der Klemmvorrichtung. Vorzugsweise weist das Verbindungsteil eine Durchgangsbohrung zur Durchführung des Seils und ein erstes Außengewinde zum Einschrauben des Verbindungsteils in ein Innengewinde des Hohlraums des Gehäuses auf, wobei das Verbindungsteil derart in den Hohlraum des Gehäuses eingeschraubt oder einschraubbar ist, dass das Verbindungsteil die Kopffläche der Seilspannvorrichtung bildet, durch die das elastische Element gegen die Stirnfläche des Stifts gedrückt wird.

Eine Weiterbildung der Erfindung sieht vor, dass der Stift an seiner der Stirnfläche abgewandten Seite einen zylindrischen Abschnitt aufweist. Dieser zylindrische Abschnitt des in den Hohlraum des Gehäuses eingesetzten Stifts ragt zumindest abschnittsweise aus dem Hohlraum und über eine äußere Kopffläche des Gehäuses hinaus. Der Stift ist dadurch mittels des zylindrischen Abschnitts gegen das elastische Element drückbar, und zwar von einem Benutzer außerhalb des Gehäuses, zur Reduzierung oder Aufhebung des von der konusförmigen Innenwand des Gehäuses auf den oder die Arme ausgeübten radial nach innen gerichteten Drucks und damit zur Reduzierung oder Beseitigung der von den Armen ausgeübten Klemmkraft auf das durch die Zentralbohrung geführte Seil. Das fixierte Seil wird dadurch wieder gelöst und ist in der Seilspannvorrichtung verschiebbar. Durch diese Möglichkeit zum Lösen der Seilspannung wird die einfache und zerstörungsfreie Demontage der Halterung sowie ein wiederholtes Spannen und Halten des Seils ermöglicht.

Die Erfindung sieht gemäß einer Weiterbildung vor, dass die Klemmvorrichtung eine Ausnehmung zur Aufnahme und Halterung der Seilspannvorrichtung aufweist. Insbesondere kann das Verbindungsteil der Seilspannvorrichtung ein zweites Außengewinde zum Einschrauben des Verbindungsteils und damit der Seilspannvorrichtung in die Ausnehmung in der Klemmvorrichtung aufweisen. Hierzu kann vorgesehen sein, dass die Ausnehmung in der Klemmvorrichtung ein mit dem zweiten Außengewinde des Verbindungsteils korrespondierendes Innengewinde aufweist.

Dadurch wird eine einfache und stabile Verbindung zwischen Klemmvorrichtung und Seilspannvorrichtung ermöglicht.

Bei der Klemmvorrichtung kann es sich um beliebige bekannte Klemmvorrichtungen handeln. Diese umfassen in der Regel zumindest zwei Komponenten, die zur Anpassung an den jeweiligen Fenster- oder Türrahmen gegeneinander verschiebbar und in einer eingenommenen Position zueinander fixierbar sind. Beispielsweise kann es sich um eine winkelförmige Komponente handeln, deren einer Schenkel mit einem an einer Vorderseite des Fenster- oder Türrahmens, die mit der Sonnen- und/oder Blickschutzvorrichtung zu versehen ist, anliegenden weiteren Komponente zusammenwirkt. Diese weitere Komponente kann die vorstehend beschriebene Ausnehmung zur Aufnahme der Seilspannvorrichtung ausbilden. Es ist aber auch möglich, dass die Klemmvorrichtung eine Kappe aufweist, die beispielsweise auf die zur Fixierung am Fenster- oder Türrahmen erforderlichen Komponenten aufgesteckt ist. An dieser Kappe kann dann ein Vorsprung vorgesehen sein, der die vorstehend beschriebene Ausnehmung zur Aufnahme der Seilspannvorrichtung ausbildet.

Bei dem Seil kann es sich um ein Drahtseil, ein Silch, einen kunststoffbeschichteten Draht oder ein Kunststoffseil, insbesondere ein Polyesterseil, handeln. Das Gehäuse und/oder der Stift und/oder das elastische Element und/oder die Kugeln und/oder das Verbindungsteil der Seilspannvorrichtung können aus Metall, insbesondere Stahl, gebildet sein.

Die Erfindung wird nachstehend auch hinsichtlich weiterer Merkmale und Vorteile anhand der Beschreibung von Ausführungsbeispielen und unter Bezugnahme auf die beiliegenden schematischen Zeichnungen näher erläutert. Es zeigen
- FIG 1: ein Ausführungsbeispiel der erfindungsgemäßen Halterung in einer Seitenansicht,
- FIG 2: die Seilspannvorrichtung des in FIG 1 gezeigten Ausführungsbeispiels einer erfindungsgemäßen Halterung in einer Seitenansicht, und
- FIG 3: einen Schnitt durch das in FIG 2 gezeigte Ausführungsbeispiel einer Seilspannvorrichtung.

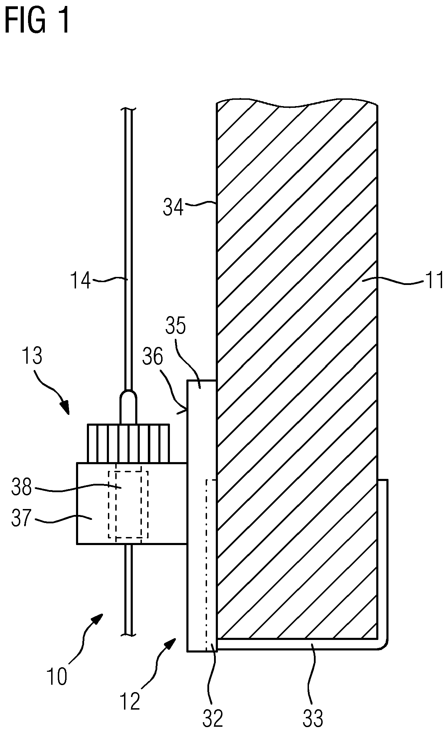

Einander entsprechende Teile und Komponenten in FIG 1 bis FIG 3 sind mit den gleichen Bezugszeichen bezeichnet.

FIG 1 zeigt schematisch ein Ausführungsbeispiel einer Halterung 10 zur Befestigung einer Sonnen- und/oder Blickschutzvorrichtung an einem Fenster- oder Türrahmen 11, der in FIG 1 im Querschnitt dargestellt ist.

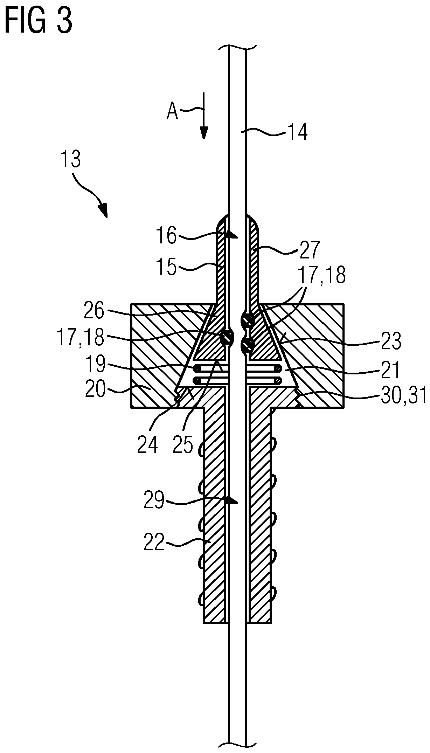

Die Halterung 10 umfasst eine Klemmvorrichtung 12 zum Festklemmen der Halterung 10 an dem Fenster- oder Türrahmen 11, ein Seil 14 zum Führen und/oder Spannen und/oder Halten der Sonnen- und/oder Blickschutzvorrichtung und eine mit der Klemmvorrichtung 12 verbundene oder verbindbare Seilspannvorrichtung 13 zum Spannen des Seils 14. Eine vorgesehene Seilspannrichtung ist durch eine Pfeil und das Bezugszeichen A in FIG 3 dargestellt.

Diese Klemmvorrichtung 12 ist nur schematisch dargestellt, es kann sich hierbei um eine beliebige Klemmvorrichtung handeln. Im dargestellten schematischen Beispiel umfasst die Klemmvorrichtung 12 eine Winkelkomponente 33 und eine weitere Komponente 32, die gegeneinander verschiebbar und in einer eingenommenen Position zueinander fixierbar sind (nicht dargestellt). Die weitere Komponente 32 liegt an einer Vorderseite 34 des Fenster- oder Türrahmens 11 an, die mit der Sonnen- und/oder Blickschutzvorrichtung zu versehen ist. Die Winkelkomponente 33 liegt an einem Seitenrand und an einer Rückseite des Fenster- oder Türrahmens 11 an. Ferner umfasst die dargestellte Klemmvorrichtung 12 eine Kappe 35, die beispielsweise auf die weitere Komponente 32 aufgesteckt ist. An einer parallel zur Vorderseite 34 des Fenster- oder Türrahmens 11 ausgerichteten Außenfläche 36 dieser Kappe 35 ist ein Vorsprung 37 vorgesehen, der eine Ausnehmung 38 zur Aufnahme der Seilspannvorrichtung 13 aufweist.

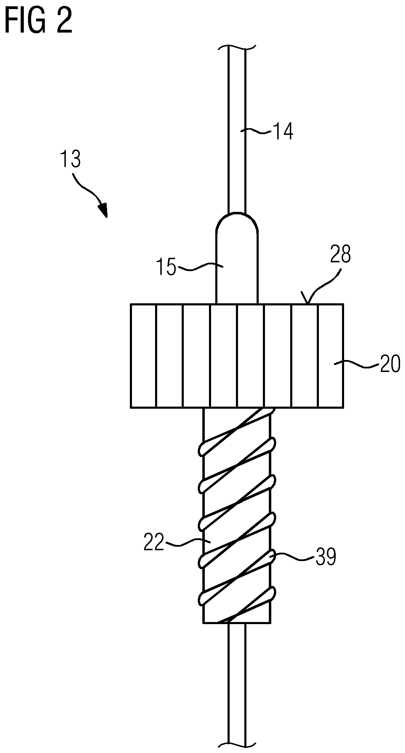

In FIG 2 ist ersichtlich, dass die Seilspannvorrichtung 13 ein Verbindungsteil 22 zum Verbinden der Seilspannvorrichtung 13 mit der Klemmvorrichtung 12 aufweist. Dieses Verbindungsteil 22 weist ein erstes Außengewinde 30 (siehe FIG 3), das nachfolgend näher beschrieben wird, und ein zweiten Außengewinde 39 auf. Mit dem zweiten Außengewinde 39 ist die Seilspannvorrichtung 13 in die Ausnehmung 38 im Vorsprung 37 der Klemmvorrichtung 12 eingeschraubt, wie in FIG 1 gezeigt. Hierzu weist die Ausnehmung 38 vorzugsweise ein mit dem zweiten Außengewinde 39 des Verbindungsteils 22 korrespondierendes Innengewinde auf.

Aus FIG 2 und 3 ist ersichtlich, dass die Seilspannvorrichtung 13 ein Gehäuse 20, einen Stift 15 und ein elastisches Element 19 (nur in FIG 3 dargestellt) umfasst. FIG 3 zeigt, dass der Stift 15 entlang der vorgesehenen Seilspannrichtung A eine durchgehende Zentralbohrung 16 zur Durchführung des Seils 14 und mehrere (erkennbar sind zwei) radial zur vorgesehenen Seilspannrichtung A elastisch bewegliche Arme 26 zur Fixierung des durch die Zentralbohrung hindurchgeführten Seils 14 aufweist.

Die Arme 26 können durch (nicht dargestellte) Längsschnitte im Stift 15, parallel zur vorgesehenen Seilspannrichtung A, voneinander getrennt sein. Die Arme 26 sind vorzugsweise um den Umfang der Zentralbohrung 16. Die Arme 26 sind so ausgebildet und angeordnet, dass sie eine Stirnfläche 25 des Stifts 15 bilden und an dieser Stirnfläche 15 nicht miteinander verbunden sind. Miteinander verbunden sind die Arme 26 nur an ihrem gegenüberliegenden Ende, in FIG 3 in einem untenstehend näher erläuterten zylindrischen Abschnitt 27 des Stifts 15. Die Arme 26 stehen radial gegenüber dem restlichen Stift 15 hervor und weisen eine konusförmige Außenwand auf.

Das Gehäuse 20 weist einen entlang der vorgesehenen Seilspannrichtung A durchgängigen Hohlraum 21 auf, in den der Stift 15 aufgenommen ist. Der Hohlraum 21 ist entlang der vorgesehenen Seilspannrichtung A abschnittsweise von einer konusförmigen Innenwand 23 begrenzt, die mit der konusförmigen Außenwand der Arme 26 korrespondiert. In FIG 3 weisen die konusförmige Außenwand der Arme 26 und die konusförmige Innenwand 23 des Gehäuses 20 einen gleich großen Konuswinkel auf. Dies muss jedoch nicht zwingend der Fall sein, auch unterschiedlich große Konuswinkel sind möglich.

Im Hohlraum 21 des Gehäuses 20 ist ferner das elastische Element 19, hier ein Federelement, konkret eine Spiralfeder, angeordnet, und zwar derart, dass eine erste Seite des elastischen Elements 19 gegen die Stirnfläche 25 des Stifts 15 drückt und eine der ersten Seite abgewandte zweite Seite des elastischen Elements 19 gegen eine Kopffläche 24 der Seilspannvorrichtung 13 drückt. Durch den Druck des elastischen Elements 19 gegen die Stirnfläche 25 des Stifts 15 werden die radial hervorstehenden Arme 26 des Stifts 15 gegen die konusförmige Innenwand 23 des Gehäuses 20 gedrückt. Dadurch werden die Arme 26 radial nach innen gedrückt und üben eine Klemmkraft auf das durch die Zentralbohrung 16 geführte Seil 14 aus.

FIG 3 zeigt, dass an einer der Zentralbohrung 16 zugewandten Innenseite der Arme 26 des Stifts 15 mehrere Kugeln 18 gelagert sind, so dass die vorstehend beschriebene Klemmkraft zumindest zum Teil über diese Kugeln 18 auf das Seil 14 übertragen wird. Die Kugeln 18 sind jeweils in einer mit der jeweiligen Kugel 18 korrespondierenden Ausnehmung 17 an der Innenseite des jeweiligen Arms 26 gelagert. Vorzugsweise sind die Kugeln 18 drehbar in ihren jeweiligen Ausnehmungen 17 gelagert. Die Darstellung von Kugeln 18 und Ausnehmungen 17 in FIG 3 ist sehr schematisch. Vorzugsweise sind Kugeln 18 und Ausnehmungen 17 derart ausgebildet, dass die Kugeln 18 in den Ausnehmungen 17 gehalten sind, beispielsweise indem die Ausnehmungen 17 die Kugeln 18 hintergreifend umfassen, das heißt mehr als eine Halbkugel wird in die Ausnehmung aufgenommen.

FIG 3 zeigt weiter, dass das Verbindungsteil 22 eine Durchgangsbohrung 29 zur Durchführung des Seils 14 und das bereits angesprochene erste Außengewinde 30 aufweist. Mit diesem ersten Außengewinde 30 ist das Verbindungsteil 22 in ein korrespondierendes Innengewinde 31 des Hohlraums 21 des Gehäuses 20 eingeschraubt, und zwar derart, dass das Verbindungsteil 22 die bereits angesprochene Kopffläche 24 der Seilspannvorrichtung 13 bildet, durch die das elastische Element 19 gegen die Stirnfläche 25 des Stifts 15 gedrückt wird.

Weiter ist in FIG 2 und FIG 3 gezeigt, dass der Stift 15 an seiner der Stirnfläche 25 abgewandten Seite einen zylindrischen Abschnitt 27 aufweist, wobei der zylindrische Abschnitt 27 aus dem Hohlraum 21 und über eine äußere Kopffläche 28 des Gehäuses 20 hinaus ragt. Mittels dieses herausragenden zylindrischen Abschnitts 27 kann der Stift 15 durch einen Benutzer von außen gegen das elastische Element 19 gedrückt werden. Dadurch wird der von der konusförmigen Innenwand 23 des Gehäuses 20 auf die Arme 16 ausgeübte radial nach innen gerichtete Druck reduziert oder beseitigt. Dadurch wiederum wird die von den mit Kugeln 18 versehenen Armen 26 ausgeübte Klemmkraft auf das durch die Zentralbohrung 16 geführte Seil 14 reduziert oder beseitigt und dadurch das fixierte Seil 14 wieder gelöst, so dass es in der Seilspannvorrichtung 13 verschiebbar ist.

### Bezugszeichenliste

- 10: Halterung
- 11: Fenster- oder Türrahmen
- 12: Klemmvorrichtung
- 13: Seilspannvorrichtung
- 14: Seil
- 15: Stift
- 16: Zentralbohrung
- 17: Ausnehmung
- 18: Kugel
- 19: Elastisches Element
- 20: Gehäuse
- 21: Hohlraum
- 22: Verbindungsteil
- 23: Innenwand
- 24: Kopffläche
- 25: Stirnfläche
- 26: Arm
- 27: Zylindrischer Abschnitt
- 28: Äußere Kopffläche
- 29: Durchgangsbohrung
- 30: Erstes Außengewinde
- 31: Innengewinde
- 32: Komponente der Klemmvorrichtung 12
- 33: Winkelkomponente der Klemmvorrichtung 12
- 34: Vorderseite
- 35: Kappe der Klemmvorrichtung 12
- 36: Außenfläche
- 37: Vorsprung
- 38: Ausnehmung
- 39: Zweites Außengewinde
- A: Vorgesehene Seilspannrichtung

## Patentansprüche

1. Halterung (10) zur Befestigung einer Sonnen- und/oder Blickschutzvorrichtung an einem Fenster- oder Türrahmen (11), umfassend
eine Klemmvorrichtung (12) zum Festklemmen der Halterung (10) an dem Fenster- oder Türrahmen (11),
ein Seil (14) zum Führen und/oder Spannen und/oder Halten der Sonnen- und/oder Blickschutzvorrichtung, und
eine mit der Klemmvorrichtung (12) verbundene oder verbindbare Seilspannvorrichtung (13) zum Spannen des Seils (14),
wobei die Seilspannvorrichtung (13) ein Gehäuse (20) und einen Stift (15) und ein elastisches Element (19) umfasst,
wobei das Gehäuse (20) einen entlang einer vorgesehenen Seilspannrichtung (A) durchgängigen Hohlraum (21) zur Aufnahme des Stifts (15) aufweist, wobei der Hohlraum (21) entlang der vorgesehenen Seilspannrichtung (A) zumindest abschnittsweise von einer konusförmigen Innenwand (23) begrenzt ist,
wobei das elastische Element (19) derart in oder am Gehäuse (20) angeordnet ist, dass es gegen eine Stirnfläche (25) des in den Hohlraum (21) eingesetzten Stifts (15) drückt,
**dadurch gekennzeichnet,**
**dass** der Stift (15) entlang der vorgesehenen Seilspannrichtung (A) eine durchgehende Zentralbohrung (16) zur Durchführung des Seils (14) und einen oder mehrere radial zur vorgesehenen Seilspannrichtung (A) bewegliche Arme (26) zur Fixierung des durch die Zentralbohrung (16) hindurchgeführten Seils (14) aufweist, wobei der oder die Arme (26) radial gegenüber dem restlichen Stift (15) hervorstehen, und
**dass** das elastische Element (19) derart in oder am Gehäuse (20) angeordnet ist, dass es den oder die radial hervorstehenden Arme (26) des Stifts (15) gegen die konusförmige Innenwand (23) des Gehäuses (20) drückt und der oder die Arme (26) dadurch radial nach innen gedrückt werden zur Ausübung einer Klemmkraft auf das durch die Zentralbohrung (16) geführte Seil (14).

2. Halterung nach Anspruch 1,
**dadurch gekennzeichnet, dass**
der oder die Arme (26) radial zur vorgesehenen Seilspannrichtung (A) elastisch beweglich sind.

3. Halterung nach Anspruch 1 oder 2,
**dadurch gekennzeichnet, dass**
an einer der Zentralbohrung (16) zugewandten Innenseite des oder der Arme (26) des Stifts (15) eine oder mehrere Kugeln (18) gelagert sind, wobei über die Kugel (18) oder die Kugeln (18) zumindest ein Teil der Klemmkraft auf das Seil (14) übertragen wird.

4. Halterung nach Anspruch 3,
**dadurch gekennzeichnet, dass**
die Kugel (18) oder die Kugeln (18) drehbar und/oder jeweils in einer mit der Kugel (18) korrespondierenden Ausnehmung (17) an der Innenseite des oder der Arme (26) gelagert sind.

5. Halterung nach einem der vorhergehenden Ansprüche,
**dadurch gekennzeichnet, dass**
der Stift (15) mehrere Arme (26) aufweist, die um den Umfang der Zentralbohrung (16) verteilt sind und vorzugsweise eine konusförmige Außenwand aufweisen, die mit der konusförmigen Innenwand (23) des Gehäuses (20) korrespondiert.

6. Halterung nach einem der vorhergehenden Ansprüche,
**dadurch gekennzeichnet, dass**
das elastische Element (19) ein Federelement, insbesondere eine Spiralfeder ist.

7. Halterung nach einem der vorhergehenden Ansprüche,
**dadurch gekennzeichnet, dass**
das elastische Element (19) zusammen mit dem Stift (15) derart im Hohlraum (21) des Gehäuses (20) angeordnet ist, dass eine erste Seite des elastischen Elements (19) gegen die Stirnfläche (25) des Stifts (15) drückt und eine der ersten Seite abgewandte zweite Seite des elastischen Elements (19) gegen eine Kopffläche (24) der Seilspannvorrichtung (13) drückt.

8. Halterung nach einem der vorhergehenden Ansprüche,
**dadurch gekennzeichnet, dass**
die Seilspannvorrichtung (13) ein Verbindungsteil (22) zum Verbinden der Seilspannvorrichtung (13) mit der Klemmvorrichtung (12) umfasst.

9. Halterung nach Anspruch 8 und nach Anspruch 7,
**dadurch gekennzeichnet, dass**
das Verbindungsteil (22) eine Durchgangsbohrung (29) zur Durchführung des Seils (14) und ein erstes Außengewinde (30) zum Einschrauben des Verbindungsteils (22) in ein Innengewinde (31) des Hohlraums (21) des Gehäuses (20) aufweist, wobei das Verbindungsteil (22) derart in den Hohlraum (21) des Gehäuses (20) eingeschraubt oder einschraubbar ist, dass das Verbindungsteil (22) die Kopffläche (24) der Seilspannvorrichtung (13) bildet, durch die das elastische Element (19) gegen die Stirnfläche (25) des Stifts (15) gedrückt wird.

10. Halterung nach einem der vorhergehenden Ansprüche,
**dadurch gekennzeichnet, dass**
der Stift (15) an seiner der Stirnfläche (25) abgewandten Seite einen zylindrischen Abschnitt (27) aufweist, wobei der zylindrische Abschnitt (27) des in den Hohlraum (21) des Gehäuses (20) eingesetzten Stifts (15) zumindest abschnittsweise aus dem Hohlraum (21) und über eine äußere Kopffläche (28) des Gehäuses (20) hinaus ragt, so dass der Stift (15) mittels des zylindrischen Abschnitts (27) gegen das elastische Element (19) drückbar ist zur Reduzierung oder Aufhebung des von der konusförmigen Innenwand (23) des Gehäuses (20) auf den oder die Arme (26) ausgeübten radial nach innen gerichteten Drucks und damit zur Reduzierung oder Beseitigung der von den Armen (26) ausgeübten Klemmkraft auf das durch die Zentralbohrung (16) geführte Seil (14).

11. Halterung nach einem der vorhergehenden Ansprüche,
**dadurch gekennzeichnet, dass**
die Klemmvorrichtung (12) eine Ausnehmung (38) zur Aufnahme und Halterung der Seilspannvorrichtung (13) aufweist.

12. Halterung nach Anspruch 11 und nach Anspruch 8,
**dadurch gekennzeichnet, dass**
das Verbindungsteil (22) der Seilspannvorrichtung (13) ein zweites Außengewinde (39) zum Einschrauben des Verbindungsteils (22) und damit der Seilspannvorrichtung (13) in die Ausnehmung (38) in der Klemmvorrichtung (12) aufweist.

13. Halterung nach Anspruch 12,
**dadurch gekennzeichnet, dass**
die Ausnehmung (38) in der Klemmvorrichtung (12) ein mit dem zweiten Außengewinde (39) des Verbindungsteils (22) korrespondierendes Innengewinde aufweist.

## Claims

1. Bracket (10) for fastening a sun and/or privacy protection device to a window or door frame (11), comprising a clamping device (12) for clamping the bracket (10) on the window or door frame (11),
a cord (14) for guiding and/or tensioning and/or holding the sun and/or privacy protection device, and
a cord tensioning device (13) that is or can be connected to the clamping device (12) for tensioning the cord (14),
wherein the cord tensioning device (13) comprises a housing (20) and a pin (15) and an elastic element (19),
wherein the housing (20) has a cavity (21) that is continuous in a provided cord tensioning direction (A) for receiving the pin (15), wherein the cavity (21) is delimited, at least in sections, in the provided cord tensioning direction (A) by a conical inner wall (23),
wherein the elastic element (19) is arranged in or on the housing (20) in such a way that it presses against an end face (25) of the pin (15) inserted into the cavity (21),
**characterised in that**
the pin (15) has a continuous central bore (16) in the provided cord tensioning direction (A) for guiding the cord (14) through and one or more arms (26) that can be moved radially relative to the provided cord tensioning direction (A) for fixing the cord (14) guided through the central bore (16), wherein the arm or arms (26) protrude radially with regards to the rest of the pin (15), and
the elastic element (19) is arranged in or on the housing (20) in such a way that it presses the radially protruding arm or arms (26) of the pin (15) against the conical inner wall (23) of the housing (20) and, as a result, the arm or arms (26) are pressed radially inwards to exert a clamping force on the cord (14) guided through the central bore (16).

2. Bracket according to claim 1,
**characterised in that**
the arm or arms (26) can be moved elastically radially relative to the provided cord tensioning direction (A).

3. Bracket according to claim 1 or 2,
**characterised in that**
one or more balls (18) are mounted on an inside of the arm or arms (26) of the pin (15) facing towards the central bore (16), wherein at least part of the clamping force is transferred to the cord (14) via the ball (18) or the balls (18).

4. Bracket according to claim 3,
**characterised in that**
the ball (18) or the balls (18) are mounted rotatably and/or, in each case, in a recess (17) corresponding to the ball (18) on the inside of the arm or arms (26).

5. Bracket according to one of the preceding claims,
**characterised in that**
the pin (15) has several arms (26) that are distributed around the periphery of the central bore (16) and preferably have a conical outer wall that corresponds to the conical inner wall (23) of the housing (20).

6. Bracket according to one of the preceding claims,
**characterised in that**
the elastic element (19) is a spring element, in particular a spiral spring.

7. Bracket according to one of the preceding claims,
**characterised in that**
the elastic element (19) is arranged together with the pin (15) in the cavity (21) of the housing (20) in such a way that a first side of the elastic element (19) presses against the end face (25) of the pin (15) and a second side of the elastic element (19) facing away from the first side presses against a head face (24) of the cord tensioning device (13).

8. Bracket according to one of the preceding claims,
**characterised in that**
the cord tensioning device (13) comprises a connection part (22) for connecting the cord tensioning device (13) to the clamping device (12).

9. Bracket according to claim 8 and according to claim 7,
**characterised in that**
the connection part (22) has a through bore (29) for guiding the cord (14) through, and a first external thread (30) for screwing the connection part (22) into an internal thread (31) of the cavity (21) of the housing (20), wherein the connection part (22) is or can be screwed into the cavity (21) of the housing (20) in such a way that the connection part (22) forms the head face (24) of the cord tensioning device (13) by means of which the elastic element (19) is pressed against the end face (25) of the pin (15).

10. Bracket according to one of the preceding claims,
**characterised in that**
the pin (15) has a cylindrical section (27) on its side facing away from the end face (25), wherein the cylindrical section (27) of the pin (15) inserted in the cavity (21) of the housing (20) protrudes at least in sections out of the cavity (21) and beyond an outer head face (28) of the housing (20), such that the pin (15) can be pressed against the elastic element (19) by means of the cylindrical section (27) for reducing or removing the pressure that is exerted by the conical inner wall (23) of the housing (20) on the arm or arms (26) and is directed radially inwards and thus for reducing or eliminating the clamping force exerted by the arms (26) on the cord (14) guided through the central bore (16).

11. Bracket according to one of the preceding claims,
**characterised in that**
the clamping device (12) has a recess (38) for receiving and holding the cord tensioning device (13).

12. Bracket according to claim 11 and according to claim 8,
**characterised in that**
the connection part (22) of the cord tensioning device (13) has a second external thread (39) for screwing the connection part (22) and thus the cord tensioning device (13) into the recess (38) in the clamping device (12).

13. Bracket according to claim 12,
**characterised in that**
the recess (38) in the clamping device (12) has an internal thread corresponding to the second external thread (39) of the connection part (22).

## Revendications

1. Dispositif (10) pour la fixation d'un brise-soleil et/ou d'un brise-vue sur un cadre de fenêtre ou de porte (11), comprenant un système de blocage (12) pour le blocage du dispositif de fixation (10) sur le cadre de fenêtre ou de porte (11),
un câble (14) pour guider et/ou tendre et/ou maintenir le brise-soleil et/ou le brise-vue, et
un dispositif de tension de câble (13), relié ou pouvant être relié au système de blocage, pour tendre le câble (14),
le dispositif de tension de câble (13) comportant un boîtier (20), une goupille (15) et un élément élastique (19),
le boîtier (20) présentant un creux (21) de bout-en-bout le long d'un dispositif de tension de câble (A) prévu, destiné à accueillir la goupille (15),
le creux (21) étant limité du moins par endroits, le long du dispositif de tension de câble (A) prévu, par une paroi intérieure en forme de cône (23), l'élément élastique (19) étant disposé dans ou sur le boîtier (20) de manière à appuyer contre une face avant (25) de la goupille introduite dans le creux (21),
**caractérisé en ce que** la goupille (15) présente, le long du dispositif de tension de câble (A) prévu, un perçage central (16) traversant destiné à l'introduction de câble (14) et un ou plusieurs bras (26) radialement mobiles par rapport au dispositif de tension de câble (A) prévu, afin d'immobiliser le câble (14) passant à travers le perçage central (16), le ou les bras (26) étant en saillie radiale par rapport au reste de la goupille (15), et **en ce que** l'élément élastique (19) est disposé dans ou sur le boîtier (20) de manière à presser le ou les bras (26) en saillie radiale de la goupille (15) contre la paroi intérieure (23) en forme de cône du boîtier (20) afin que le ou les bras (26) soient pressés radialement vers l'intérieur pour exercer une force de blocage sur le câble (14) passant à travers le perçage central (16).

2. Dispositif selon la revendication 1, **caractérisé en ce que** le ou les bras (26) sont mobiles de manière élastique radialement au dispositif de tension de câble (A) prévu.

3. Dispositif selon la revendication 1 ou 2, **caractérisé en ce qu'**une ou plusieurs billes (18) sont positionnées sur un côté intérieur, dirigé vers le perçage central (16), du ou des bras (26) de la goupille (15), au moins une partie de la force de blocage étant transmise au câble (14) par le biais de la bille (18) ou des billes (18).

4. Dispositif selon la revendication 3, **caractérisé en ce que** la bille (18) ou les billes (18) sont positionnées de manière à pouvoir tourner et/ou chacune dans un évidement (17), correspondant à la bille (18), sur le côté intérieur du ou des bras (26).

5. Dispositif selon l'une quelconque des revendications précédentes, **caractérisé en ce que** la goupille (15) présente plusieurs bras (26) répartis sur la circonférence du perçage central (16) et présentent, de préférence, une paroi extérieure en forme de cône qui correspond à la paroi intérieure (23) en forme de cône du boîtier (20).

6. Dispositif selon l'une quelconque des revendications précédentes, **caractérisé en ce que** l'élément élastique (19) est un ressort, en particulier un ressort hélicoïdal.

7. Dispositif selon l'une quelconque des revendications précédentes, **caractérisé en ce que** l'élément élastique (19) est disposé, avec la goupille (15), dans le creux (21) du boîtier (20) de telle manière qu'un premier côté de l'élément élastique (19) appuie contre la face avant (25) de la goupille (15) et un deuxième côté opposé au premier côté de l'élément élastique (19) appuie contre une face de tête (24) du dispositif de tension de câble (13).

8. Dispositif selon l'une quelconque des revendications précédentes, **caractérisé en ce que** le dispositif de tension de câble (13) comprend une partie assemblage (22) pour relier le dispositif de tension de câble (13) au système de blocage (12).

9. Dispositif selon la revendication 8 et la revendication 7, **caractérisé en ce que** la partie assemblage (22) présente un perçage traversant (29) pour faire passer le câble (14) et un premier filetage mâle (30) pour visser la partie assemblage (22) dans un filetage femelle (31) du creux (21) du boîtier (20), la partie assemblage (22) étant vissée ou pouvant être vissée dans le creux (21) du boîtier (20) de manière à former la face de tête (24) du dispositif de tension de câble (13) au moyen duquel l'élément élastique (19) est pressé contre la face de tête (25) de la goupille (15).

10. Dispositif selon l'une quelconque des revendications précédentes, **caractérisé en ce que** la goupille (15) présente, sur son côté opposé à la face avant (25), un tronçon cylindrique (27), le tronçon cylindrique (27) de la goupille (15) introduite dans le creux (21) du boîtier (20), dépassant, au moins par endroits, du creux (21) et étant en porte-à-faux sur une face de tête (28) extérieure du boîtier (20), de sorte que la goupille (15) peut être pressée contre l'élément élastique (19) au moyen du tronçon cylindrique (27) afin de réduire ou de supprimer la pression exercée par la paroi intérieure (23) en forme de cône du boîtier (20) sur le ou les bras (26) et dirigée radialement vers l'intérieur et ainsi réduire ou bien éliminer la force de blocage exercée par les bras (26) sur le câble (14) passant à travers le perçage central (16).

11. Dispositif selon l'une quelconque des revendications précédentes, **caractérisé en ce que** le dispositif de blocage (12) présente un évidement (38) destiné à recevoir et à maintenir le dispositif de tension de câble (13).

12. Dispositif selon la revendication 11 et la revendication 8, **caractérisé en ce que** la partie assemblage (22) du dispositif de tension de câble (13) présente un deuxième filetage mâle (39) pour visser la partie assemblage (22) et donc le dispositif de tension de câble (13) dans l'évidement (38) du dispositif de blocage (12).

13. Dispositif selon la revendication 12, **caractérisée en ce que** l'évidement (38) présente, dans le dispositif de blocage (12), un filetage femelle correspondant au deuxième filetage mâle (39) de la partie assemblage (22).
